## Europäisches Patentamt

## European Patent Office

## Office européen des brevets

(19)

(11) Veröffentlichungsnummer: **0 026 943**
**B1**

(12)

# EUROPÄISCHE PATENTSCHRIFT

(45) Veröffentlichungstag der Patentschrift:
**08.08.84**

(51) Int. Cl.³: **F 21 Q 1/00,** F 21 M 3/02

(21) Anmeldenummer: **80106136.7**

(22) Anmeldetag: **09.10.80**

(54) **Leuchte.**

(30) Priorität: **09.10.79 AT 6593/79**
**23.06.80 AT 3289/80**
**24.06.80 AT 3317/80**

(43) Veröffentlichungstag der Anmeldung:
**15.04.81 Patentblatt 81/15**

(45) Bekanntmachung des Hinweises auf die Patenterteilung:
**08.08.84 Patentblatt 84/32**

(84) Benannte Vertragsstaaten:
**AT BE DE FR GB IT NL**

(56) Entgegenhaltungen:
**DE - A - 2 755 432**
**DE - C - 459 467**
**FR - A - 581 340**
**FR - A - 2 031 616**
**US - A - 3 828 178**

(73) Patentinhaber: **Irotronic Ltd., Loch Garman (IE)**

(72) Erfinder: **Sassmannshausen, Knut Otto, Rothenbach,
D-6580 Idar-Oberstein 3 (DE)**

(74) Vertreter: **Klose, Hans, Dipl.-Phys., Kurfürstenstrasse 32,
D-6700 Ludwigshafen (DE)**

BUNDESDRUCKEREI BERLIN

**Beschreibung**

Die Erfindung betrifft eine Leuchte mit einem Hohlspiegelreflektor und mit einem auf der Reflektorachse angeordneten Leuchtkörper, von welchem über den Hohlspiegelreflektor und durch eine axiale Hauptlichtaustrittsöffnung ein axiales Hauptlichtbündel ausgesandt wird, mit mindestens einer weiteren, im Hohlspiegelreflektor angeordneten Lichtaustrittsöffnung und mit der Lichtaustrittsöffnung zugeordneten transparenten Bereichen in dem den Hohlspiegelreflektor zumindest teilweise umgebenden Gehäuse, wobei das von dem Leuchtkörper ausgesandte und durch die weitere Lichtaustrittsöffnung und die transparenten Bereiche austretende Licht wenigstens ein Seitenlichtbündel bildet.

Derartige Leuchten werden insbesondere als Schluß-, Sicherungs- oder Signalleuchten oder auch Scheinwerfer für Fahrzeuge, beispielsweise Kraftfahrzeuge oder Fahrräder eingesetzt. Hierbei ist unter einer Signalleuchte beispielsweise eine Baustellenleuchte, eine Blinkleuchte, eine Parkleuchte oder auch eine Standlichtleuchte zu verstehen.

Eine derartige Leuchte ist aus der deutschen Offenlegungsschrift 2 755 432 bekannt. Die bekannte Leuchte sendet ein Seitenlicht aus, um die Leuchte für den Verkehr auch dann sichtbar zu machen, wenn sich der Verkehr von der Seite bzw. quer zur Achsrichtung der Leuchte nähert. Es ist somit wenigstens auf einer Seite der Leuchte ein Seitenlichtbündel vorhanden, welches beispielsweise einen Winkelbereich von etwa 20° überstreicht, wobei etwa 10° des genannten Winkelbereiches oberhalb bzw. unterhalb der Horizontalebene liegen.

Darüber hinaus ist das Seitenlichtbündel in der Horizontalebene selbst weit gefächert. Ein derartiges Seitenlichtbündel ist jedoch nicht in allen Fällen ausreichend, wie es nachfolgend an einem Beispiel einer Verkehrssituation erläutert werden soll:

Ein Fahrradfahrer muß an einer Kreuzung beim Linksabbiegen wegen Gegenverkehr anhalten und vom Fahrrad absteigen. Der Fahrradfahrer stellt sich hierbei links neben sein Fahrrad und neigt dieses ebenfalls nach links, beispielsweise um 6°. Dies hat zur Folge, daß das oben genannte Seitenlichtbündel auf der linken Seite nur noch um 4° und nicht wie bei senkrechter Stellung um 10° nach oben abstrahlt. Nähert sich nun von links ein schwerer Sattelschlepper, dessen Fahrer sich mit seinen Augen 2,50 m über der Fahrbahn befindet, so verschwindet die Fahrradbeleuchtung für den Fahrer des Sattelschleppers, sobald er sich dem Fahrrad auf etwa 25 m genähert hat. Der Fahrer kann somit das aus der Leuchte ausgesandte Licht nicht mehr wahrnehmen und, insbesondere bei blendendem Gegenverkehr, auch den Fahrradfahrer nicht mehr erkennen, so daß es zu einem schweren Unfall kommen kann.

In der US-PS 38 28 178 ist eine Leuchte beschrieben, welche ein transparentes Gehäuse sowie eine Reflektorplatte aufweist. Die Reflektorplatte befindet sich außerhalb des Gehäuses, wobei ein oberes Teil der Reflektorplatte über das Gehäuse hinwegragt, um das Abstrahlen des von einer Glühlampe ausgestrahlten Lichtes nach oben zu verhindern. Ferner enthält das transparente Gehäuse an seitlichen Flächen Reflektoren, mittels welchen von der Seite auf die Leuchte auftreffendes Fremdlicht reflektiert wird. Durch das transparente Gehäuse können nach oben Lichtstrahlen austreten, doch aufgrund des erwähnten Teils der Reflektorplatte wird ein nach oben gerichtetes Abstrahlen eines Lichtbündels verhindert. Auch bei einer derart ausgebildeten Leuchte ist die Sichtbarkeit nicht in allen Fällen in ausreichender Weise gewährleistet.

Der Erfindung liegt daher die Aufgabe zugrunde, eine Leuchte der eingangs genannten Art mit einem geringen Herstellungsaufwand derart zu verbessern, daß die Leuchte auch aus Blickrichtungen sichtbar ist, welche über dem Seitenlichtbündel liegen, um so die Sicherheit nicht unwesentlich zu verbessern. Ferner soll bei Ausbildung der Leuchte als Fahrradschlußleuchte der Fahrradfahrer auch während der Fahrt die Funktion in einfacher Weise prüfen können.

Diese Aufgabe wird erfindungsgemäß dadurch gelöst, daß der Hohlspiegelreflektor eine nach oben gerichtete Lichtaustrittsöffnung aufweist, welcher transparente Bereiche des Gehäuses zugeordnet sind, wobei das von dem Leuchtkörper ausgesandte und durch die nach oben gerichtete Lichtaustrittsöffnung sowie durch die transparenten Bereiche austretende Licht ein zusätzliches drittes Lichtbündel bildet, daß die Lichtstrahlen dieses dritten Lichtbündels in einem räumlichen Winkel ausgesandt werden und daß im Strahlengang des nach oben austretenden Lichts mindestens ein optisches System vorgesehen ist, welches das vom Leuchtkörper ausgesandte Licht erfaßt und in dem räumlichen Winkel streut.

Die erfindungsgemäße Leuchte zeichnet sich durch einen einfachen und kostengünstigen Aufbau aus und trägt in erheblichem Maße zur Erhöhung der Verkehrssicherheit bei. Aufgrund des zusätzlichen dritten Lichtbündels wird sichergestellt, daß die Leuchte nicht nur über den seitlichen Winkelbereich des Seitenlichtbündels, sondern auch in einem über den Seitenlichtbündel liegenden Winkelbereich wahrnehmbar ist. Die Leuchte oder beispielsweise das mit einer derartigen Leuchte ausgestattete Fahrrad kann somit auch bei einer Neigung bezüglich einer Vertikalebene ohne Schwierigkeiten wahrgenommen werden. Je nach Anwendungsfall oder Einsatzgebiet der Leuchte kann das zusätzliche Lichtbündel in seinem Öffnungswinkel, in der Richtung oder aber auch in der Lichtstärke vorgegeben werden, wobei ggf. auch ein unmittelbarer Übergang des dritten Lichtbündels zum Seitenlichtbündel und/oder zum axialen Lichtbündel erreicht werden kann. Die in dem Hohlspiegelreflektor vorgesehene Lichtaustrittsöffnung kann ohne besondere Schwierigkeiten in
der jeweils gewünschten Weise, insbesondere in
Form eines runden Loches, vorgesehen werden.

Für die Herstellung einer derartigen Lichtaustrittsöffnung sind somit praktisch keine zusätzlichen Herstellungskosten verbunden, doch es
wird in besonders einfacher Weise eine verkehrsgerechte und den betrieblichen Gegebenheiten gewachsene Leuchte geschaffen, durch
welche in nicht unerheblichem Maße die Verkehrssicherheit erhöht wird. Aufgrund des im
Strahlengang des nach oben austretenden
Lichts vorgesehenen optischen Systems wird
gewährleistet, daß die zugeordnete Lichtaustrittsöffnung im Hohlspiegelreflektor vergleichsweise klein gehalten werden kann und das zusätzliche dritte Lichtbündel dennoch einen vergleichsweise großen Öffnungswinkel aufweisen
wird.

Vorteilhafterweise wird das optische System,
mit welchem der Austrittswinkel vergrößert
wird, in dem Leuchtgehäuse angeordnet. Da das
Leuchtengehäuse zumindest auch in dem Bereich, in welchem das zusätzliche dritte Lichtbündel ausgestrahlt wird, transparent ist, bereitet es keine besonderen Schwierigkeiten, in diesem Bereich auch ein optisches System vorzusehen. Zusätzliche Herstellungskosten sind praktisch nicht erforderlich, da das optische System
gemeinsam mit dem Leuchtengehäuse in einem
Arbeitsgang herstellbar ist.

In einer bevorzugten Ausführungsform ist das
optische System als eine rotationssymmetrische, konvexe Zerstreuungslinse ausgebildet.
Mit einer derartigen Zerstreuungslinse kann der
Austrittswinkel des zusätzlichen Lichtbündels
definiert vorgegeben werden, so daß je nach Anwendungsfall und Einsatzgebiet der Leuchte ein
mehr oder wenig großer Austrittswinkel für das
zusätzliche Lichtbündel erreicht wird.

In einer bevorzugten Ausführungsform ist die
Lichtstärke des oberen, zusätzlichen Lichtbündels geringer als die Lichtstärke des Seitenlichtbündels, wobei die letztere Lichtstärke geringer
ist als die Lichtstärke des axialen Hauptlichtbündels. Die erfindungsgemäße Leuchte weist somit
in den genannten drei Bereichen unterschiedliche Lichtstärken auf, welche den jeweiligen Anforderungen entsprechen. Das axiale Hauptlichtbündel weist die größte Lichtstärke auf, da es
bereits aus großen Entfernungen erkannt werden muß. Für das Seitenlichtbündel ist hingegen
eine geringere Lichtstärke erforderlich, da der zu
warnende Seitenverkehr auch einen geringen
Abstand zur Leuchte hat.

Die Lichtstärke des zusätzlichen Lichtbündels
des dritten Lichtabstrahlbereiches kann darüber
hinaus noch erheblich geringer vorgegeben werden, da es im wesentlichen nur zur Warnung des
Verkehrs dient, welcher sich der Leuchte schon
auf einen relativ geringen Abstand angenähert
hat.

In einer bevorzugten Ausführungsform
schließt der unterste Lichtstrahl des oberen
Lichtbündels mit der Horizontalen einen Winkel
ein, der höchstens so groß ist, wie der Winkel,
den der oberste Lichtstrahl des Seitenlichtbündels mit der Horizontalen einschließt. Das obere
zusätzliche Lichtbündel schließt sich somit unmittelbar an das Seitenlichtbündel an, so daß
zwischen den beiden Lichtbündeln kein toter Bereich oder eine Lücke vorhanden ist. Aufgrund
der vergleichsweise geringen Abmessungen einer Leuchte können die genannten Strahlen
auch einen Abstand zueinander aufweisen, ohne
daß eine Lücke von einem etwas entfernt stehenden Betrachter noch wahrgenommen werden wird.

Vorteilhaft wird die obere Lichtaustrittsöffnung dadurch gebildet, daß ein Kegelmantel,
welcher zu einer Achse, die im Leuchtkörper zur
Achse des Hohlspiegelreflektors senkrecht
steht, rotationssymmetrisch ist und mit seiner
Spitze nach unten im Leuchtkörper steht, sich
mit dem Hohlspiegelreflektor schneidet, und
daß der innerhalb der Ränder bzw. Schnittlinien
liegende Teil des Reflektors weggelassen ist.

Vorteilhaft wird das zusätzliche Lichtbündel
des dritten Lichtabstrahlbereiches im wesentlichen vertikal nach oben ausgesandt. Das genannte Lichtbündel weist zweckmäßigerweise
einen Öffnungswinkel von 30 bis 120° auf, wobei
der Öffnungswinkel bevorzugt etwa 90° beträgt.
Eine derart ausgebildete Leuchte ist somit auch
von oben her in dem angegebenen Winkelbereich sehr gut erkennbar.

In einer bevorzugten Ausführungsform
schließt der unterste Lichtstrahl des oberen dritten Lichtbündels mit der Horizontalen einen Winkel ein, welcher höchstens so groß ist wie der
Winkel, den der oberste Lichtstrahl des durch
die Hauptlichtaustrittsöffnung austretenden
Lichts mit der Horizontalen einschließt.

Da die Höhendifferenz zwischen einer Leuchte, insbesondere einer Fahrradschlußleuchte,
und den Augen eines hoch sitzenden Fahrers eines sich im wesentlichen in Richtung der Reflektorachse nähernden Sattelschleppers sehr groß
ist, ist es vorteilhaft, wenn in der angegebenen
Weise das axiale Hauptlichtbündel lückenlos in
das nach oben gerichtete dritte Lichtbündel
übergeht. Somit bleibt die Leuchte für den hoch
sitzenden Fahrer bis auf kürzeste Entfernungen
sichtbar.

Ausführungsbeispiele der erfindungsgemäßen Leuchte sind in den Zeichnungen dargestellt
und werden nachfolgend erläutert. Es zeigen

Fig. 1a, 1b, 1c jeweils eine Ansicht eines Fahrrads mit einer erfindungsgemäßen Schlußleuchte von der Seite und von hinten sowie eine
Aufsicht von oben,

Fig. 2 einen Schnitt durch die Schlußleuchte
gemäß Fig. 1 in einer Horizontalebene,

Fig. 3 eine Aufsicht in Richtung der Reflektorachse auf eine Schlußleuchte, welche eine
obere Lichtaustrittsöffnung aufweist,

Fig. 4 eine weitere Ausführungsform einer Schlußleuchte, welche nur auf einer Seite ein Seitenlichtbündel aussendet, in einer Aufsicht in Richtung der Reflektorachse,

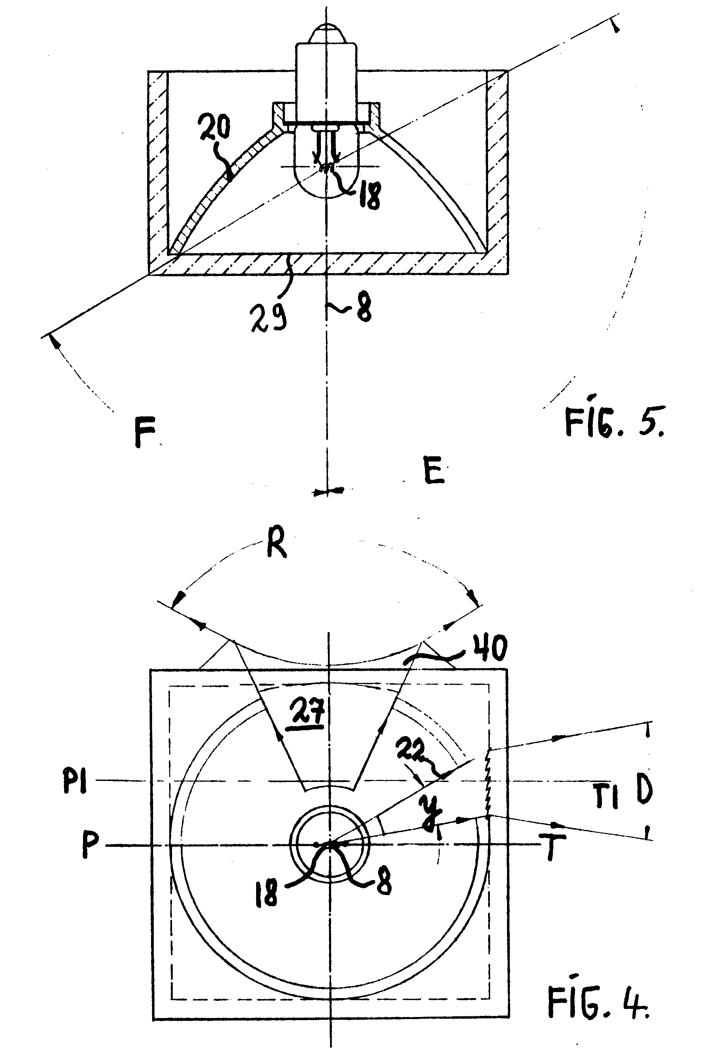

F i g. 5 einen Schnitt durch die Leuchte gemäß Fig. 4 in der Horizontalebene P-T,

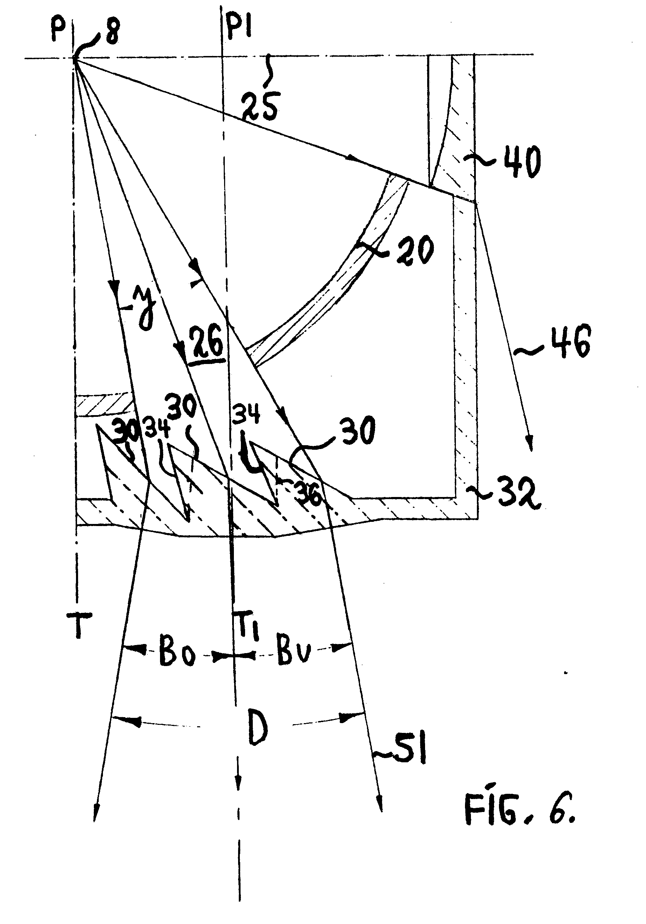

Fig. 6 eine Vergrößerung eines Teils der Leuchte gemäß Fig. 5,

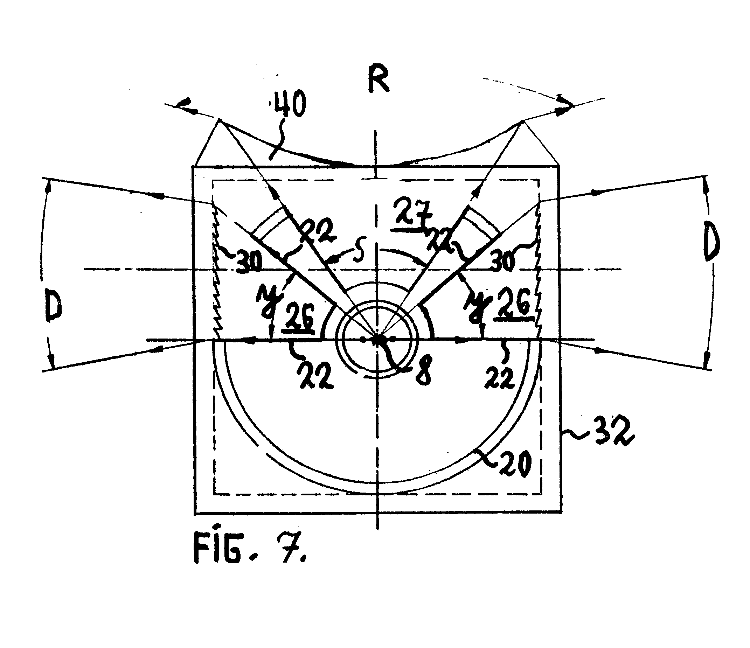

Fig. 7 eine Ausführungsform einer Leuchte mit zwei Seitenlichtbündeln, und zwar in Aufsicht in Richtung der Reflektorachse,

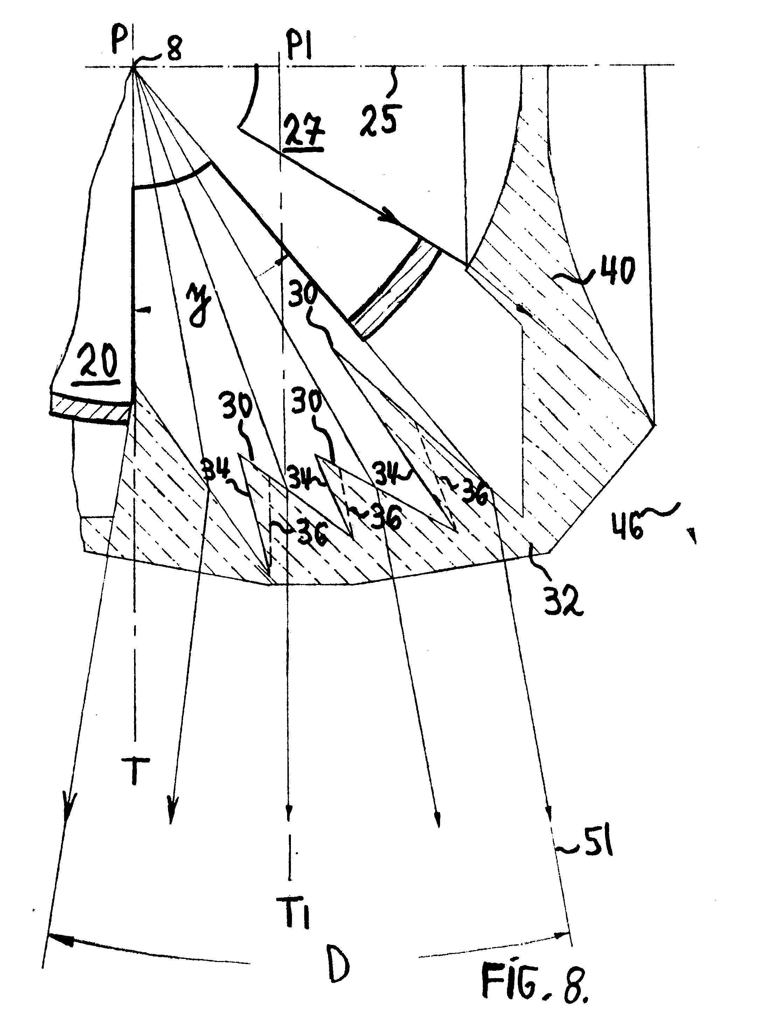

Fig. 8 eine Ausschnittsvergrößerung der Leuchte gemäß Fig. 7,

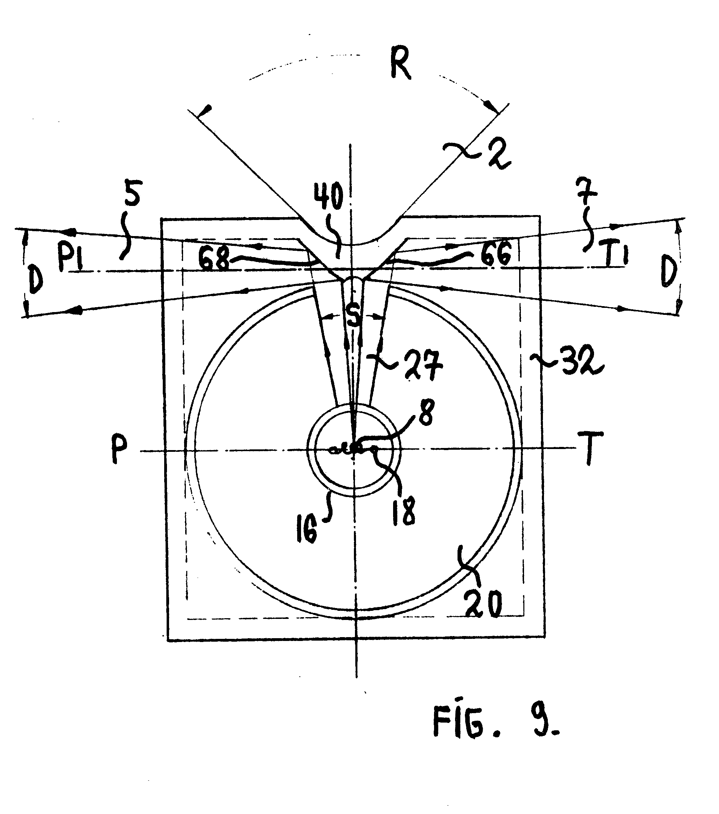

Fig. 9 eine weitere Ausführungsform einer Schlußleuchte in Aufsicht in Richtung der Reflektorachse, wobei der Hohlspiegelreflektor nur eine obere Lichtaustrittsöffnung aufweist,

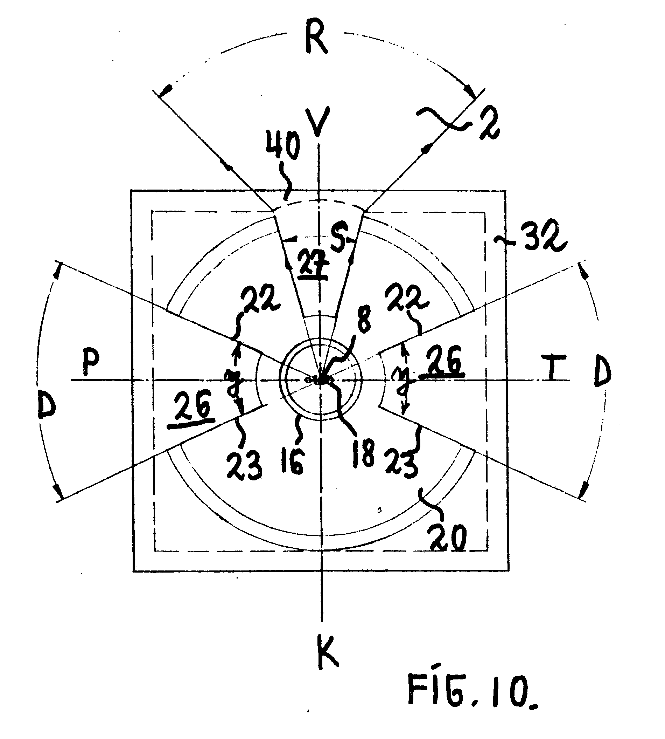

Fig. 10 eine bevorzugte Ausführungsform einer Schlußleuchte in Aufsicht in Richtung der Reflektorachse, wobei der Leuchtkörper und zwei Lichtaustrittsöffnungen in der gleichen horizontalen Ebene sich befinden.

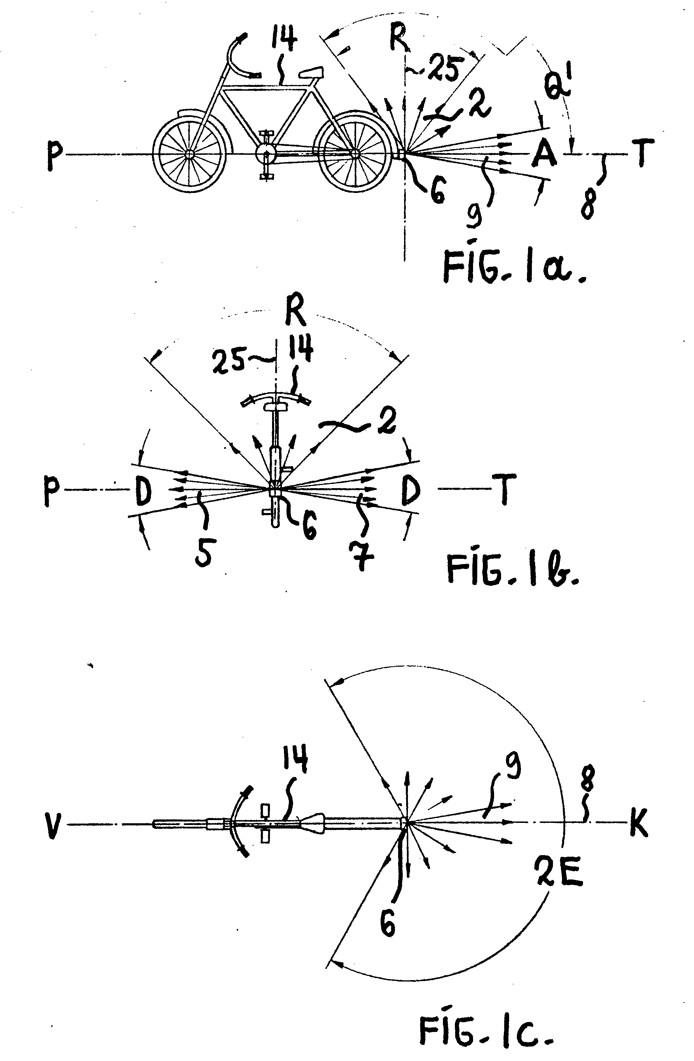

In Fig. 1a ist ein Fahrrad 14 mit einer erfindungsgemäßen Leuchte, welche als Schlußleuchte 6 ausgebildet ist, in einer seitlichen Ansicht dargestellt. Die Schlußleuchte 6 strahlt in der Horizontalebene P-T ein axiales Hauptlichtbündel 9 unter einem Öffnungswinkel A nach hinten ab. Die Schlußleuchte 6 enthält, wie nachher eingehend noch beschrieben wird, einen Hohlspiegelreflektor sowie einen Leuchtkörper, wobei der Leuchtkörper in der genannten Horizontalebene P-T sich befindet und die Reflektorachse 8 ebenfalls in der genannten Horizontalebene sich befindet. Die Schlußleuchte 6 sendet ein zusätzliches Lichtbündel 2 nach oben aus, dessen Lichtstrahlen in einem die vertikale Achse 25 einschließenden Winkel R ausgesandt werden. Es sei darauf hingewiesen, daß der genannte Winkel keineswegs rotationssymmetrisch bezüglich der vertikalen Achse 25 sein muß. Der Winkel R wird in der axialen Vertikalebene, welche mit der Zeichenebene gemäß Fig. 1a übereinstimmt, bevorzugt derart vorgegeben, daß sich das obere dritte Lichtbündel 2 unmittelbar an die durch die axiale Hauptlichtaustrittsöffnung austretenden Lichtstrahlen anschließt. Die Lichtstrahlen können sich auch überlappen. Dadurch entsteht ein durchgehender Lichtabstrahlbereich Q', welcher sich von der Reflektorachse 8 über das Lichtbündel 2 bis zu deren äußersten Rand erstreckt.

In Fig. 1b ist das Fahrrad 14 mit der Schlußleuchte 6 in einer Ansicht von hinten, und zwar in Richtung der Reflektorachse 8 dargestellt. Die Schlußleuchte 6 strahlt nach beiden Seiten, und zwar in der horizontalen Ebene P-T Seitenlichtbündel 5 und 7 ab, wobei die genannten Seitenlichtbündel 5, 7 durch seitliche Lichtaustrittsöffnungen des Hohlspiegelreflektors der Leuchte 6 austreten. Hierauf wird nachfolgend noch näher eingegangen werden.

Die Seitenlichtbündel 5, 7 treten unter seitlichen Öffnungswinkeln D aus der Schlußleuchte 6 heraus. Darüber hinaus wird ein zusätzliches Lichtbündel 2 aus der Leuchte 6 vertikal nach oben derart ausgesandt, daß der Abstrahlbereich sich in einem Winkelbereich oberhalb der genannten Seitenlichtbündel 5 und 7 erstreckt. Das Lichtbündel 2 wird unter einem Öffnungswinkel R abgestrahlt. Aufgrund des oberen Lichtbündels 2 wird erfindungsgemäß sichergestellt, daß der Fahrradfahrer bzw. die Schlußleuchte 6 bei Neigung des Fahrrades auch vom Fahrer eines Sattelschleppers erkannt werden kann. Damit das oben genannte axiale Hauptlichtbündel unten nicht in starkem Maße durch das obere Lichtbündel 2 geschwächt wird, ist es von besonderem Vorteil, daß das obere Lichtbündel vergleichsweise geringe Lichtstärke aufweist. Die Seitenlichtbündel 5 und 7 weisen zwar ebenfalls eine geringere Lichtstärke als das axiale Hauptlichtbündel unten, aber auch eine größere Lichtstärke als das obere Lichtbündel 2 auf. Die erfindungsgemäße Leuchte bzw. Schlußleuchte weist somit in den drei verschiedenen Abstrahlbereichen auch drei voneinander verschiedene Lichtstärken auf, wobei das auf große Entfernungen wahrzunehmende axiale Hauptlichtbündel unten die größte Lichtstärke, das oder die Seitenlichtbündel 5, 7 eine geringere Lichtstärke und das nach oben ausgesandte Lichtbündel 2 die geringste Lichtstärke aufweist. Die genannten Unterschiede und Abstufungen der einzelnen Lichtstärken können ohne Schwierigkeiten bei der erfindungsgemäßen Leuchte, insbesondere durch geeignete Dimensionierung der im Hohlspiegelreflektor vorgesehenen Lichtaustrittsöffnungen vorgegeben und den jeweiligen Bedingungen angepaßt werden. Darüber hinaus ist es von besonderer Bedeutung, daß auch die Winkelbereiche der verschiedenen Lichtbündel ohne besondere herstellungstechnische Schwierigkeiten vorgegeben werden können. Gemäß Fig. 1b ist zwischen dem Lichtabstrahlbereich des zusätzlichen Lichtbündels 2 und den beiden Seitenlichtbündeln 5 und 7 ein freier Bereich vorhanden. Es sei darauf hingewiesen, daß auch das obere zusätzliche Lichtbündel 2 sich unmittelbar oben an die Seitenlichtbündel 5 und 7 anschließen kann, wozu der obere Öffnungswinkel R oder aber auch die seitlichen Öffnungswinkel D entsprechend zu vergrößern sind.

In Fig. 1c ist das Fahrrad 14 mit der erfindungsgemäßen Schlußleuchte 6 in einer Aufsicht von oben dargestellt, wobei eine Vertikalebene V-K durch das Fahrrad 14 verlaufen soll. Die Schlußleuchte 6 strahlt in der Horizontalebene, welche mit der Zeichenebene übereinstimmt, die beiden Seitenlichtbündel 5 und 7 jeweils unter einem äußeren Horizontalwinkel E ab, so daß insgesamt ein Bereich von 2 E ausgeleuchtet wird. In der genannten Horizontalebene wird auch das axiale Hauptlicht in Richtung der Reflektorachse 8 nach hinten ausgestrahlt. Zur Verdeutlichung der Lichtstärkenunterschiede, ist das vergleichsweise starke axiale Hauptlicht mit langen Pfeilen dargestellt, während die Seitenlichtbündel 5 und 7 mit entsprechend kürzeren Pfeilen dargestellt sind. Aus den gleichen Gründen sind in Fig. 1b die Lichtstrahlen des oberen Lichtbündels 2 durch kürzere Pfeile dargestellt als die Strahlen der Seitenlichtbündel 5 und 7.

Es sei besonders hervorgehoben, daß die erfindungsgemäße Leuchte nicht nur als eine Schlußleuchte, sondern auch als eine Scheinwerferleuchte für das Fahrrad 14 ausgebildet sein kann, doch ist dies aufgrund der Einfachheit in der Zeichnung nicht weiter dargestellt. Schließlich soll durch die Darstellung und die Beschreibung einer Schlußleuchte für ein Fahrrad keine Einschränkung der Erfindung auf eine derartige Leuchte vorgenommen werden und es sei ausdrücklich hervorgehoben, daß die erfindungsgemäße Leuchte auch als Sicherungsoder Signalleuchte oder auch als Scheinwerfer für beliebige Fahrzeuge oder auch als stationäre Leuchte, beispielsweise als eine Baustellenleuchte oder als eine Parkleuchte ausgebildet werden kann.

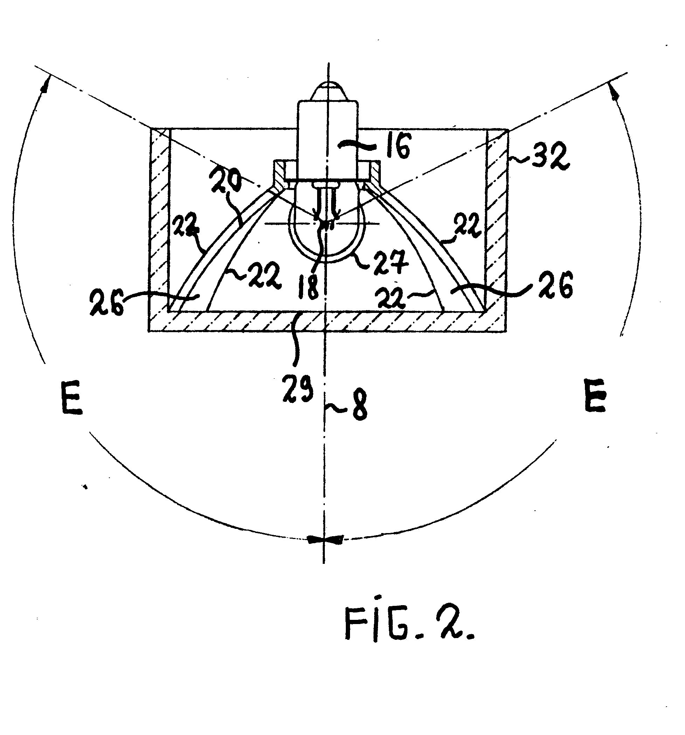

Fig. 2 zeigt einen Schnitt durch eine Leuchte in einer horizontalen Ebene. Die Leuchte enthält einen Hohlspiegelreflektor 20, in welchem auch ein Leuchtkörper 18 einer Glühlampe 16 sich befindet. Der Reflektor weist seitliche Lichtaustrittsöffnungen 26 auf, welche als Schlitze ausgebildet sind und Ränder 22 aufweisen. Der Reflektor 20 weist ferner eine obere Lichtaustrittsöffnung 27 auf, durch welche das von der Glühlampe 16 bzw. dem Leuchtkörper 18 ausgesandte Licht nach oben austreten kann. Der überwiegende Teil des vom Leuchtkörper ausgesandten Lichtes wird in bekannter Weise vom Hohlspiegelreflektor 20 gesammelt und tritt in Richtung der Reflektorachse 8 als ein hier nicht näher zu erläuterndes axiales Hauptlichtbündel aus der Hauptlicht-Austrittsöffnung 29 aus. Aufgrund der seitlichen Lichtaustrittsöffnungen 26 können auch die Seitenlichtbündel 5 und 6 ausgesandt werden, welche in der horizontalen Ebene die horizontalen Winkelbereiche E ausleuchten. Im vorliegenden Fall sind die Horizontalwinkel E bezogen auf die Reflektorachse 8 jeweils etwa 110° groß, so daß insgesamt ein Winkelbereich von 220° in der horizontalen Ebene ausgeleuchtet werden kann. Die Leuchte weist ferner ein Gehäuse 32 auf, welches als eine transparente Abdeckkappe ausgebildet ist. Ein derartiges Leuchtengehäuse kann je nach Bedarf in den verschiedenen Farben eingefärbt sein, so daß beispielsweise rotes oder gelbes Licht von der Leuchte ausgesendet werden kann.

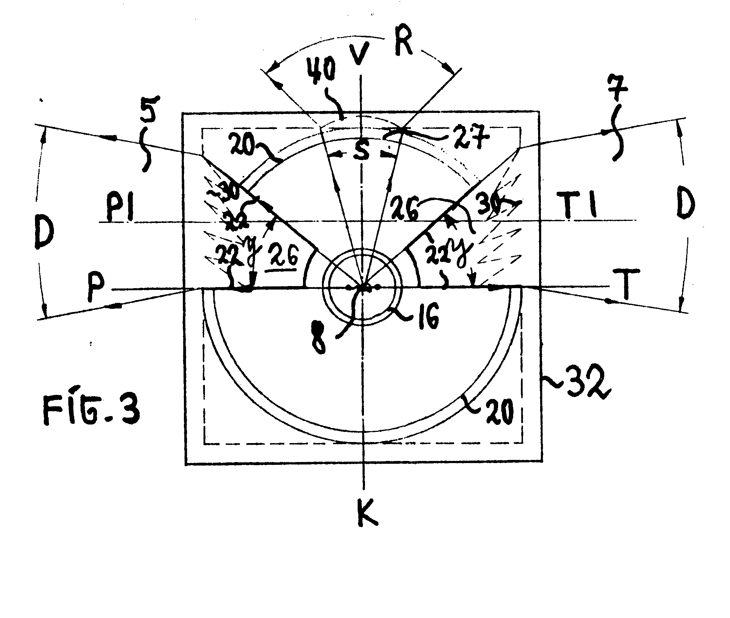

Fig. 3 zeigt eine Aufsicht auf die Leuchte gemäß Fig. 2 in Richtung auf die Hauptlicht-Austrittsöffnung bzw. in Richtung der Reflektorachse 8. Aufgrund der oberhalb der Horizontalebene P-T angeordneten seitlichen Lichtaustrittsöffnungen 26 wird dort das von der Glühlampe 16 ausgesandte Licht nicht zum axialen Hauptlichtbündel umgelenkt, sondern es gelangt zu lichtumlenkenden Mitteln, welche als Prismen 30 ausgebildet sind. Mittels den Prismen 30 wird das über einen Winkelbereich y ausgesandte Licht in horizontale Richtungen umgelenkt. Die lichtumlenkenden Mittel bzw. Prismen 30 strahlen das Licht in horizontale Richtungen mit einem Abstrahlwinkel von etwa 10° oberhalb und unterhalb der somit beleuchteten Horizontalebene P1—T1 ab, wobei die letztgenannte Horizontalebene einen Abstand zu der Leuchtkörper-Horizontalebene P-T aufweist. Die Leuchte sendet somit Seitenlichtbündel 5 und 7 unter den vertikalen seitlichen Öffnungswinkeln D aus. Der Reflektor 20 weist in der Vertikalebene V-K oberhalb der Reflektorachse 8 die Lichtaustrittsöffnung 27 mit einem Öffnungswinkel S auf. Der oberen Lichtaustrittsöffnung 27 ist im Gehäuse 32 ein zerstreuendes optisches System 40 zugeordnet, und es wird von der Leuchte somit ein zusätzliches Lichtbündel 2 mit einem oberen Öffnungswinkel R in einem dritten Lichtabstrahlbereich ausgesandt.

Zur Erläuterung sei darauf hingewiesen, daß als erster Lichtabstrahlbereich der Bereich des axialen Hauptlichts als zweiter Lichtabstrahlbereich der Bereich der Seitenlichtbündel und als dritter Lichtabstrahlbereich der Bereich des nach oben austretenden Lichtbündels bezeichnet wird. Mit anderen Worten, in jedem der genannten Lichtabstrahlbereiche können auch mehrere Lichtbündel vorhanden sein. Durch das nach oben austretende Lichtbündel 2 ist sichergestellt, daß die Leuchte auch auf kürzere Entfernungen sichtbar bleibt, also auch für Entfernungen, in denen der obere Winkelbereich von D das Auge eines sich von der Seite her annähernden Fahrers nicht mehr erreicht. Bei Fahrrädern hat dieser obere Lichtabstrahlbereich auch noch den Vorteil, daß der Fahrradfahrer auf diese Art und Weise während der Fahrt kontrollieren kann, ob seine Schlußleuchte auch noch brennt.

Die Fig. 4 und 5 zeigen eine Ausführungsform der Erfindung. Der Reflektor 20 ist hier nahezu rundum bis auf zwei kleine schlitzförmige Lichtaustrittsöffnungen 26, 27 erhalten geblieben. Das bedeutet, daß das axiale Hauptlichtbündel hier sehr stark ist und lediglich nach einer Seite hin das Licht unter einem Winkel y aus dem Reflektor 20 seitlich austreten kann und auf die Prismen 30 des Gehäuses trifft, um dort in horizontale Richtungen in einen Winkelbereich von D umgelenkt zu werden. Es entsteht eine »beleuchtete Horizontalebene« P1-T1, über der in einem Winkelbereich Bo Licht ausgestrahlt wird, wobei Bu mindestens 10° groß ist. Unterhalb der beleuchteten Horizontalebene P1-T1 wird Licht in einem Winkelbereich Bu abgestrahlt, wobei Bu im vorliegenden Falle auch etwas über 10° groß ist. Der seitliche Schlitz 26 in dem Hohlspiegelreflektor 20 ist so tief, daß von der Achse 8 der Leuchte aus gesehen, Licht in horizontalen Richtungen im Bereich des Winkels E austreten kann. E wird durch den Winkelbereich F ergänzt, d. h. durch Licht, welches von vorne durch die axiale Hauptlichtbündel-Austrittsöffnung 29 des Reflektors austritt. Die in den Fig. 4 und 5 dargestellte Leuchte ist vor allen Dingen für zweispurige Fahrzeuge, also Autos, verwendbar, da dort nur nach außen hin ein großer Lichtabstrahlbereich E erreicht werden muß.

Der oberen Lichtaustrittsöffnung 27 ist ein zerstreuendes optisches System 40 zugeordnet. Das nach oben vom Leuchtkörper 18 ausgesandte und durch die Lichtaustrittsöffnung 27 über das zerstreuende optische System 40 ausgesandte Licht strahlt unter einem oberen Öffnungswinkel R nach oben ab. Das optische System 40 ist bevorzugt als ein Linsenbalken ausgebildet, welcher eine gekrümmte Oberfläche aufweist.

Fig. 6 ist eine Vergrößerung eines Teils der Fig. 4, um den Strahlengang besser erläutern zu können. Der Reflektor 20 hat eine seitliche schlitzförmige Aussparung 26, durch die die Lichtstrahlen seitlich auf die transparente Abdeckkappe 32 im Bereich der Prismen 30 fallen. Die unteren Flanken 34 dieser Prismen 30 liegen genau in Richtung der Lichtquelle, d. h., in Richtung der optischen Achse 8. Dadurch wird alles Licht, was durch die Lichtaustrittsöffnung 26 auf die Prismen 30 fällt, in den Winkelbereich D hinein umgelenkt. Will man dagegen, daß nicht alles Licht umgelenkt wird, dann kann man die unteren Flanken der Prismen so enden lassen, wie das in den gestrichelten Linien 36 gezeigt wird. Dadurch kann ein kleiner Anteil des Lichts über den Winkelbereich Bo nach oben hinaus austreten, um so die Sichtbarkeit der Leuchte auf kürzere Entfernungen sicherzustellen. Selbstverständlich könnte man dies auch dadurch tun, daß zwischen den einzelnen Prismen kurze planparallele Abschnitte der transparenten Gehäusekappe 32 stehenbleiben, durch die Licht in der ursprünglichen Richtung hindurchfallen könnte. Von dem dritten Lichtabstrahlbereich nach oben ausgesandten Licht ist der unterste Lichtstrahl 46 dargestellt. Der unterste Lichtstrahl 46 verläuft in der gleichen Richtung wie der oberste Lichtstrahl 51 des Seitenlichtbündels. Da die Winkel der genannten Lichtstrahle 46 und 51 zur Horizontalebene gleich groß sind, wird eine Lücke oder ein toter Bereich zwischen den genannten Lichtbündeln vermieden. Auf diese sehr vorteilhafte Weise wird gewährleistet, daß auf jeden Fall Licht zu einem oberhalb der Horizontalebene sich befindenden Menschen bzw. Fahrer eines Lastkraftwagens gelangen kann. Da die Abstände zwischen den Strahlen 46 und 51 nur wenige mm betragen, wird die somit vorhandene »scheinbare« Lücke von einem etwas entfernt stehenden Menschen nicht mehr wahrgenommen. Bevorzugt schneidet der untere Lichtstrahl 46 des oberen Lichtbündels den oberen Lichtstrahl 51 des Seitenlichtbündels, damit auf jeden Fall die Leuchte auch bei Schrägstellung des Fahrzeuges, beispielsweise des Fahrrades, wahrgenommen werden kann.

Fig. 7 zeigt eine Leuchte, welche seitlich Licht nach beiden Seiten, also nach rechts und links hin, abstrahlt. Das Licht tritt durch die Lichtaustrittsöffnung 26 seitlich aus dem Reflektor 20 aus. Diese Lichtaustrittsöffnung 26 ist durch die Ränder 22 des Reflektors begrenzt. Die Prismen 30 leiten das Licht in vorwiegend horizontale Richtungen mit dem vertikalen Ausstrahlwinkel D um.

Das Leuchtengehäuse 32 weist oben ein lichtzerstreuendes optisches System 40 auf, so daß das obere Lichtbündel unter einem Winkel R ausgestrahlt wird, welcher größer ist als der Öffnungswinkel S der oberen Lichtaustrittsöffnung 27.

In Fig. 8 ist eine Ausschnittsvergrößerung von Fig. 7 gezeigt, wobei die lichtumlenkenden Prismen übertrieben vergrößert dargestellt sind. Auch hier sieht man, daß die unteren Flanken 34 der Prismen alle in Richtung auf die Lichtquelle zeigen. Auf diese Weise kann alles Licht oder nahezu alles Licht, welches vom Lichtschwerpunkt ausgeht, in horizontale Richtungen umgelenkt werden. Will man dies jedoch nicht, dann kann man die unteren Flanken der Prismen entlang der gestrichelten Linien 36 enden lassen. Dann fällt etwas Licht außerhalb des Winkelbereiches D nach oben hindurch. Auch hier könnte man dies dadurch erreichen, daß man zwischen den einzelnen Prismen kurze planparallele Bereiche des transparenten Leuchtengehäuses 32 stehen läßt. Man hat also bei der erfindungsgemäßen Leuchte die Möglichkeit, D nach oben hin auszudehnen und dabei die Lichtverteilung so zu gestalten, daß nur immer so viel Licht in weitere seitliche Richtungen austritt, um die Sichtbarkeit für immer kürzer werdende Entfernungen sicherzustellen.

Fig. 9 zeigt eine Aufsicht in Richtung der Reflektorachse auf eine weitere Leuchte, welche nur eine einzige obere Lichtaustrittsöffnung 27 aufweist. Das vom Leuchtkörper 18 durch die Lichtaustrittsöffnung 27 nach oben austretende Licht gelangt zum Teil auf Spiegelflächen 66 und 68, welche im Leuchtengehäuse 32 angeordnet sind. Die Spiegelflächen 66 und 68 sind hierbei derart gegenüber einer Horizontalebene geneigt, daß das auftreffende Licht in der Horizontalebene P1-T1 seitlich abgestrahlt wird. Wie bei den oben bereits erläuterten Ausführungsformen der erfindungsgemäßen Leuchte, treten die derart erzeugten Seitenlichtbündel 5 und 7 unter einem seitlichen Öffnungswinkel D aus der Leuchte aus. Obgleich nur eine einzige im wesentlichen vertikal nach oben ausgerichtete Lichtaustrittsöffnung 27 vorhanden ist, wird mittels der Spiegelflächen 66 und 68 bzw. ganz allgemein mittels lichtablenkenden Mitteln erreicht, daß das nach oben austretende Licht seitlich abgelenkt wird und als Seitenlichtbündel aus der Leuchte austritt. Weiterhin ist im Gehäuse 32, und zwar oberhalb des Leuchtkörpers 18 ein zerstreuendes optisches System 40 vorgesehen, welches insbesondere als Linsenbalken zwischen den genannten Spiegelflächen 66 und 68 angeordnet ist. Auf diese bevorzugte Weise wird wiederum gewährleistet, daß ein oberes Lichtbündel 2 aus der Leuchte austritt. Durch geeignete Ausbildung und Dimensionierung des optischen Systems 40 sowie der Spiegelflächen 66 und 68 kann auch bei einer derartigen Ausführungsform erreicht werden, daß die unteren Randstrahlen des oberen Lichtbündels 2 sich praktisch ohne Lücken an die oberen Randstrahlen der Seitenlichtbündel 5 und 7 anschließen oder aber zumindest parallel zu diesen verlaufen.

In Fig. 10 ist eine bevorzugte Ausführungsform einer Schlußleuchte in Aufsicht in Richtung der Reflektorachse 8 dargestellt. Die Schlußleuchte ist ähnlich der Leuchte gemäß Fig. 3 ausgebildet, wobei jedoch im Unterschied zur Leuchte gemäß Fig. 3 die Lichtaustrittsöffnungen 26 in der Leuchtkörper-Horizontalebene P-T angeordnet sind. Die Ränder 22, 23 der genannten Lichtaustrittsöffnungen 26 liegen symmetrisch zur Horizontalebene P-T, wobei der Winkelbereich y bevorzugt 36° beträgt. Das von der Glühlampe 16 bzw. vom Leuchtkörper 18 seitlich ausgesandte Licht tritt somit symmetrisch zur Horizontalebene P-T durch die Lichtaustrittsöffnungen 26 hindurch und wird als Seitenlichtbündel unter einem Öffnungswinkel D seitlich abgestrahlt. Hierbei sind im Gegensatz zur Leuchte gemäß Fig. 3 keine lichtumlenkenden Mittel erforderlich. Der Reflektor 20 weist in der Vertikalebene V-K oberhalb der Reflektorachse 8 die Lichtaustrittsöffnung 27 mit einem Öffnungswinkel S auf. Dieser oberen Lichtaustrittsöffnung 27 ist im Gehäuse 32 ein zerstreuendes optisches System zugeordnet, und es wird somit von der Leuchte ein zusätzliches Lichtbündel 2 mit dem oberen Öffnungswinkel R in dem dritten Lichtabstrahlbereich ausgesandt.

Bei den oben erläuterten Ausführungsformen ist das lichtzerstreuende optische System 40 in dem Leuchtengehäuse 32 angeordnet bzw. mit diesem integriert, wodurch eine besonders einfache und kostengünstige Herstellung gewährleistet ist. Derartige optische Systeme können aber auch ohne den Rahmen der Erfindung zu verlassen, im Reflektor selbst angeordnet sein. Darüber hinaus sei darauf hingewiesen, daß die angegebenen Lichtaustrittsöffnungen im Hohlspiegelreflektor nicht notwendigerweise körperlich wahrnehmbare Öffnungen darstellen müssen, sondern beispielsweise bei einem Reflektor mit einem transparenten Grundkörper und einer Verspiegelung durch entsprechende »Öffnungen« in der Verspiegelung hergestellt sein können.

**Patentansprüche**

1. Leuchte mit einem Hohlspiegelreflektor und mit einem auf der Reflektorachse angeordneten Leuchtkörper, von welchem über den Hohlspiegelreflektor und durch eine axiale Hauptlichtaustrittsöffnung ein axiales Hauptlichtbündel ausgesandt wird, mit mindestens einer weiteren, im Hohlspiegelreflektor angeordneten Lichtaustrittsöffnung und mit der Lichtaustrittsöffnung zugeordneten transparenten Bereichen in dem den Hohlspiegelreflektor zumindest teilweise umgebenden Gehäuse, wobei das von dem Leuchtkörper ausgesandte und durch die weitere Lichtaustrittsöffnung und die transparenten Bereiche austretende Licht wenigstens ein Seitenlichtbündel bildet, dadurch gekennzeichnet, daß der Hohlspiegelreflektor (20) eine nach oben gerichtete Lichtaustrittsöffnung (27) aufweist, welcher transparente Bereiche des Gehäuses (32) zugeordnet sind, wobei das von dem Leuchtkörper (18) ausgesandte und durch die nach oben gerichtete Lichtaustrittsöffnung (27) sowie durch die transparenten Bereiche austretende Licht ein zusätzliches drittes Lichtbündel (2, 3) bildet, daß die Lichtstrahlen dieses dritten Lichtbündels (2, 3) in einem räumlichen Winkel (R) ausgesandt werden und daß im Strahlengang des nach oben austretenden Lichts mindestens ein optisches System (40) vorgesehen ist, welches das vom Leuchtkörper (18) ausgesandte Licht erfaßt und in dem räumlichen Winkel (R) streut.

2. Leuchte nach Anspruch 1, dadurch gekennzeichnet, daß das optische System (40) im Leuchtengehäuse (32) angeordnet ist.

3. Leuchte nach Anspruch 1 oder 2, dadurch gekennzeichnet, daß als optisches System (40) eine konvexe Zerstreuungslinse vorgesehen ist, welche bevorzugt rotationssymmetrisch oder als ein Linsenbalken ausgebildet ist.

4. Leuchte nach einem der Ansprüche 1 bis 3, dadurch gekennzeichnet, daß die Lichtstärke des dritten Lichtbündels (2, 3) geringer ist als die Lichtstärke des Seitenlichtbündels (5, 7) und daß die Lichtstärke des Seitenlichtbündels (5, 7) geringer ist als die Lichtstärke des axialen Hauptlichtbündels (9).

5. Leuchte nach einem der Ansprüche 1 bis 4, dadurch gekennzeichnet, daß der unterste Lichtstrahl (46) des dritten Lichtbündels (2, 3) mit der Horizontalen einen Winkel einschließt, der höchstens so groß ist wie der Winkel, den der oberste Lichtstrahl (51) des Seitenlichtbündels (5, 7) mit der Horizontalen einschließt.

6. Leuchte nach einem der Ansprüche 1 bis 5, dadurch gekennzeichnet, daß die nach oben gerichtete Lichtaustrittsöffnung (27) dadurch gebildet ist, daß ein Kegelmantel, welcher zu einer Achse (25), die im Leuchtkörper (18) zur Achse (8) des Hohlspiegelreflektors (20) senkrecht steht, rotationssymmetrisch ist und mit seiner Spitze nach unten im Leuchtkörper (18) steht, sich mit dem Hohlspiegelreflektor (20) schneidet, und daß der innerhalb der Ränder (21, 23) liegende Teil des Hohlspiegelreflektors (20) weggelassen ist.

7. Leuchte nach einem der Ansprüche 1 bis 6, dadurch gekennzeichnet, daß das zusätzliche dritte Lichtbündel (2, 3) einen Öffnungswinkel (R) von 30° bis 120°, vorzugsweise von 90° aufweist.

8. Leuchte nach einem der Ansprüche 1 bis 7, dadurch gekennzeichnet, daß der unterste Lichtstrahl (46) des dritten Lichtbündels (2, 3) mit der Horizontalen einen Winkel einschließt, der höchstens so groß ist wie der Winkel, den der oberste Lichtstrahl des durch die Hauptlichtaustrittsöffnung (29) austretenden Lichtbündels mit der Horizontalen einschließt.

## Claims

1. A light with a concave mirror reflector and with a light source arranged on the reflector axis, from which an axial principle beam of light is emitted via the concave mirror reflector and through an axial principle light outlet opening, with an least one additional light outlet opening arranged in the concave mirror reflector and with transparent regions allocated to the light outlet opening in the housing at least partially surrounding the concave mirror reflector, the light emitted by the light source and issuing through the additional light outlet opening and the transparent regions forming at least one lateral beam of light, characterised in that the concave mirror reflector (20) has an upwardly pointing light outlet opening (27), which is provided with transparent regions of the housing (32), the light emitted by the light source (18) and issuing through the upwardly pointing light outlet opening (27) and through the transparent regions forming an additional third beam of light (2, 3) in that the rays of light from this third beam of light (2, 3) are emitted in a spatial angle (R) and in that there is provided in the ray path of the upwardly issuing light at least one optical system (40) which detects the light emitted by the light source (18) and scatters it in the spatial angle (R).

2. A light according to claim 1, characterised in that the optical system (40) is arranged in the light housing (32).

3. A light according to claim 1 or 2, characterised in that a convex divergent lens which is preferably designed rotationally symmetrically or as a lens girder is provided as optical system (40).

4. A light according to one of claims 1 to 3, characterised in that the light intensity of the third beam of light (2, 3) is smaller than the light intensity of the lateral beam of light (5, 7) and in that the light intensity of the lateral beam of light (5, 7) is smaller than the light intensity of the axial principle beam of light (9).

5. A light according to one of claims 1 to 4, characterised in that the lowest light ray (46) of the third beam of light (2, 3) encloses with the horizontal an angle which is at most as large as the angle enclosed by the top light ray (51) of the lateral beam of light (5, 7) with the horizontal.

6. A light according to one of claims 1 to 5, characterised in that the upwardly pointing light outlet opening (27) is formed in that a cone envelope which is rotationally symmetrical to an axis (25) perpendicular to the axis (8) of the concave mirror reflector (20) in the light source (18) and is arranged with its tip downwards in the light source (18), intersects the concave mirror reflector (20) and in that the portion of the concave mirror reflector (20) lying within the edges (21, 23) of the concave mirror reflector (20) is omitted.

7. A light according to one of claims 1 to 6, characterised in that the additional third beam of light (2, 3) has an opening angle (R) of 30° to 120°, preferably of 90°.

8. A light according to one of claims 1 to 7, characterised in that the lowest light ray (46) of the third beam of light (2, 3) encloses an angle with the horizontal which is at most as large as the angle enclosed by the top light ray of the beam of light issuing through the principle light outlet opening (29) with the horizontal.

## Revendications

1. Lampe avec miroir réflecteur concave et avec corps lumineux, placé sur l'axe du réflecteur, à partir duquel un faisceau lumineux principal, et axial est émis par le miroir réflecteur concave et par un orifice axial principal de sortie de lumière, avec au moins un autre orifice de sortie de lumière placé dans le miroir réflecteur concave et avec des zones transparentes correspondantes à l'orifice de sortie de lumière dans le boîtier entourant au moins en partie le miroir réflecteur concave, ainsi la lumière émise par le corps lumineux, par l'autre orifice de sortie de lumière et par les zones transparentes constitue au moins un faisceau lumineux latéral. Caractérisée ainsi, le miroir réflecteur concave (20), présente un orifice de sortie de lumière (27), orienté vers le haut, auquel correspondent des zones transparentes du boîtier (32), ce faisant la lumière diffusée émise par le corps lumineux (18) et par l'orifice de sortie de lumière (27) orienté vers le haut, ainsi que par les zones transparentes, constitue un troisième faisceau lumineux (2, 3) supplémentaire, les rayons lumineux de ce troisième faisceau lumineux (2, 3) sont émis dans un espace angulaire (R) et dans la marche des rayons de la lumière émise vers le haut, un système optique (40) est au moins prévu, il capte la lumière émise par le corps lumineux (18) et la diffuse dans l'espace angulaire (R).

2. Lampe d'après revendication 1, caractérisée par le système optique (40) placé dans le boîtier lumineux (32).

3. Lampe d'après revendication 1 ou 2, caractérisée par une lentille divergente convexe qui est prévue comme système optique (40), de préférence à symétrie de révolution ou constituée comme une poutre lenticulaire.

4. Lampe d'après une des revendications de 1 à 3, caractérisée par: l'intensité du troisième faisceau lumineux (2, 3) 'est plus faible que l'intensité lumineuse du faisceau lumineux latéral (5, 7), elle même inférieure à l'intensité lumineuse du principal faisceau lumineux axial (9).

5. Lampe d'après une des revendications de 1 à 4, caractériséepar: le rayon lumineux inférieur (46) du troisième faisceau lumineux (2, 3) forme un angle avec l'horizontale, au plus aussi important que l'angle formé avec l'horizontale par le rayon lumineux (51) supérieur du faisceau lumineux latéral (5, 7).

6. Lampe d'après une des revendications de 1 à 5, caractérisée par: l'orifice de sortie de lumière (27), orienté vers le haut, est formé de la façon suivante: une aire latérale de cône, située sur un axe (25), lui même placé perpendiculairement dans le corps lumineux (18) par rapport à l'axe (8) du miroir réflecteur concave (20), est à symétrie de révolution, sa pointe est orientée vers le bas dans le corps lumineux (18) et coupe le miroir réflecteur concave (20), la partie située à l'intérieur des bords (21, 23) du miroir réflecteur concave (20) est délaissée.

7. Lampe d'après une des revendications de 1 à 6, caractérisée par: le troisième faisceau lumineux supplémentaire (2, 3) présente un angle d'ouverture (R) de 30° à 120°, de préférence de 90°.

8. Lampe d'après une des revendications de 1 à 7, caractérisée par: le rayon lumineux inférieur (46) du troisième faisceau lumineux (2, 3) forme un angle avec l'horizontale qui au plus aussi grand que l'angle formé par le rayon lumineux supérieur du faisceau lumineux diffusé par l'orifice principal de sortie de lumière (29).

FIG. 1a.

FIG. 1b.

FIG. 1c.

FIG. 2.

FIG.3

FIG. 5.

FIG. 4.

FIG. 6.

FIG. 7.

FÍG. 8.

FIG. 9.

FIG. 10.